# EUROPÄISCHE PATENTANMELDUNG

(11) **EP 3 919 326 A1**
(43) Veröffentlichungstag der Anmeldung: **08.12.2021**
(21) Anmeldenummer: 20178199.4
(22) Anmeldetag: 04.06.2020
(51) Int. Cl.: B60R 1/00, B60R 11/04, B60Q 1/26, H04N 5/225, G03B 35/10

(54) **FAHRZEUGLEUCHTE MIT INTEGRIERTER VIDEOKAMERA**

(71) Anmelder: odelo GmbH, 70329 Stuttgart (DE)
(72) Erfinder: VOLLMER, Marco, 73728 Esslingen am Neckar (DE); KARLOVIC, Kristian, 73529 Schwäbisch Gmünd (DE)
(74) Vertreter: Benninger, Johannes

(57) **Zusammenfassung**

Es wird eine Fahrzeugleuchte (01) mit einer in deren von einem Leuchtengehäuse und einer Lichtscheibe (03) wenigstens teilweise umgebenden Leuchteninnenraum zumindest zum Teil beherbergten Videokamera (05), welche durch wenigstens einen Abschnitt der Lichtscheibe (03) blickt, beschrieben.

Die Fahrzeugleuchte (01) zeichnet sich dadurch aus, dass wenigstens einem Teil des Blickfelds (07) der Videokamera (05) zumindest ein in dem Leuchteninnenraum beherbergtes abbildendes optisches System (06) vorgesetzt ist, vermittels welchen abbildenden optischen Systems (06) der auf es gerichtete Teil des Blickfelds (07) der Videokamera (05) auf mindestens ein in einer von der Richtung des verbleibenden Teils des Blickfelds (71) abweichenden, anderen Richtung liegendes, interessierendes Blickfeld (72) umgelenkt wird.

## Beschreibung

Die Erfindung betrifft eine Fahrzeugleuchte gemäß dem Oberbegriff des Anspruchs 1.

Insbesondere beschäftigt sich die Erfindung mit einem in einer Fahrzeugleuchte integrierten System zur Erweiterung des Sichtbereichs einer Videokamera.

Die Erfindung ist im Bereich der Video- und Bilderfassung von Teilen einer Fahrzeugumgebung zur Unterstützung eines Fahrzeugführers, insbesondere mittels mehrerer fahrzeugmontierter bild- und/oder videogebender Kameras, sowie deren Anordnung in Fahrzeugleuchten angesiedelt.

Bekannt sind Videokameras am Fahrzeugheck zur Fahrzeugführerunterstützung während des Einparkens.

Bekannt sind zusätzlich zu einer am Fahrzeugheck montierten Videokamera an der Unterseite der Außenrückblickspiegel und im Bereich des vorderen Stoßfängers oder des Kühlergrills angeordnete Videokameras, zur Fahrzeugführerunterstützung während des Rangierens auf engem Raum. Dies kann mithilfe echter Videobilder der verschiedenen Videokameras verwirklicht sein, die beispielsweise auf einem mehrfach geteilten, gemeinsamen Bildschirm angezeigt werden, von denen auch nur eines oder zwei zur Darstellung auswählbar sind, oder mithilfe einer anhand der Videokamerabilder erzeugten virtuellen Umgebung, welche das Fahrzeug und dies umgebende, anhand der Videokamerabilder erkannte Objekte beispielsweise in einer Draufsicht zeigt.

Für eine optimale Fahrzeugführerunterstützung ist es hierbei hilfreich, dass die erwähnten Videokameras freie Sicht auf eine Fahrzeugextremität, wie etwa einen Stoßfänger oder einen Seitenschweller oder eine Anhängerkupplung haben und/oder selbst an einer Fahrzeugextremität angeordnet sind, von wo aus jeweils eine freie Sicht zumindest auf einen Teil der Fahrzeugumgebung gegeben ist.

An den selbst solche Fahrzeugextremitäten darstellenden Fahrzeugecken sind typischerweise Begrenzungs- und sonstige Fahrzeugleuchten, wie etwa Heckleuchten und Frontscheinwerfer angeordnet. Diese verfügen über eine Stromversorgung und über einen Anschluss an das Bord-Datennetz des Fahrzeugs, beispielsweise zur Ausfallerkennung von Leuchtmitteln oder deren Lichtquellen. Hierdurch sind Fahrzeugleuchten prädestiniert, Videokameras zur Umgebungserfassung zu beherbergen.

Die mittels derart angeordneter Videokameras bis dato erreichte Qualität der Fahrzeugführerunterstützung lässt den Wunsch aufkeimen, Videokameras auch für andere Anwendungsszenarien zur Fahrzeugführerunterstützung einzusetzen, bei denen eine zufriedenstellend hohe Verkehrssicherheit mit den bekannten Anordnungen von Videokameras bislang nicht sichergestellt ist.

Ein erstes Anwendungsszenario kann als Ausfahren aus engen Gassen bezeichnet werden. Es betrifft beispielsweise eine Situation, in welcher ein eigenes Fahrzeug aus engen Gassen oder Parklücken quer zu einer Fahrbahn mit eingeschränkter Sicht, beispielsweise zwischen blickdichten Wänden, quer zur Fahrbahn in einen Verkehrsfluss einfahren möchte. Bekannt ist dies beispielsweise durch ein quer zur Fahrbahn zwischen zwei Lieferwagen eingeparktes eigenes Fahrzeug. Dabei hat der Fahrzeugführer aus seiner Position im eigenen Fahrzeug heraus keinen Einblick in die quer verlaufende Fahrbahn, einhergehend mit einer Beeinträchtigung der Verkehrssicherheit.

Die Schwierigkeiten für den Fahrzeugführer liegen bei dem ersten Anwendungsszenario in der aus seiner Position im eigenen Fahrzeug verdeckten Sich in die Ferne, beispielsweise durch ein daneben befindliches fremdes Fahrzeug und/oder eine blickdichte Wand, sowie insbesondere durch die B- und C-Säule des eigenen Fahrzeugs.

Ein zweites Anwendungsszenario kann als Umsicht oder Suround-View bezeichnet werden. Dies betrifft beispielsweise Situationen, in denen ein eigenes Fahrzeug beispielsweise in einem spitzen Winkel in einen Verkehrsfluss einfädeln möchte, oder in dem ein eigenes Fahrzeug aus einem mehrspurigen Verkehrsfluss rückwärts parallel oder quer zur Fahrbahn einparken möchte. Dabei hat der Fahrzeugführer aus seiner Position im eigenen Fahrzeug heraus keinen direkten Einblick in die schräg von hinten verlaufende Fahrbahn, ebenfalls einhergehend mit einer Beeinträchtigung der Verkehrssicherheit.

Die Schwierigkeiten für den Fahrzeugführer liegen bei dem zweiten Anwendungsszenario in der aus seiner Position im eigenen Fahrzeug beispielsweise durch die B- und C-Säule und den Kofferraum des eigenen Fahrzeugs verdeckten Sich in der Nähe des Fahrzeughecks sowie in einer erschwerten Einschätzung der Entfernung zu beispielsweise herannahenden, fremden Fahrzeugen über die Rückblickspiegel.

Je nach Anwendungsszenario kristallisieren sich dabei unterschiedliche, für das jeweilige Anwendungsszenario vorteilhafte, vermittels der Videobilder wiedergebbare Sichtfelder heraus.

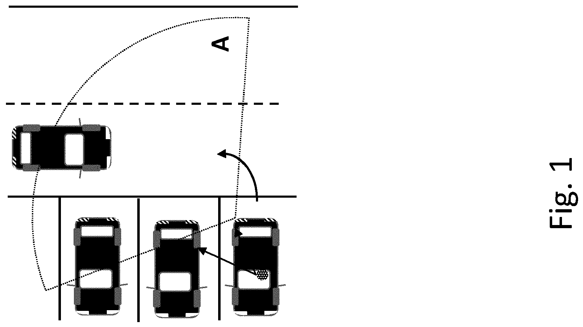

Für das erste Anwendungsszenario des Ausfahrens aus engen Gassen ist ein in Fig. 1 dargestelltes Sichtfeld A vorteilhaft. Das Sichtfeld A sieht vor, Entfernungen bis etwa 50 m mit einem horizontalen Winkel von etwa ± 60° nach beiden Richtungen zur Ecke des Fahrzeughecks einzusehen. Dabei bedeutet der Ausdruck zur Ecke des Fahrzeughecks eine Blickrichtung von 45° zur Fahrzeuglängsachse nach außen. Im Falle des rückwärts Ausparkens, wie etwa beim rückwärts Ausfahren aus einer engen Gasse, ist die nach außen gerichtete Blickrichtung nach Fahrzeug hinten gerichtet, im Falle des vorwärts Ausparkens, wie etwa beim vorwärts Ausfahren aus einer engen Gasse, nach Fahrzeug vorne. Weiterhin beläuft sich der vertikale Sichtbereich in etwa 2 m Abstand vorteilhaft auf etwa 2 m in der Höhe.

Für den Fahrzeugführer ist im ersten Anwendungsszenario eine visuelle Einschätzung des Geschehens im betreffenden Sichtfeld A unter geringstmöglicher Beeinträchtigung der Verkehrssicherheit erforderlich. Eine geringstmögliche Beeinträchtigung der Verkehrssicherheit liegt vor, wenn mit dem Herausstrecken des Fahrzeugbugs oder des Fahrzeughecks aus der engen Gasse ein Einblick in des Sichtfeld A möglich ist, der eine visuelle Einschätzung des Verkehrsgeschehens und der Entfernung zu sich annähernden fremden Fahrzeugen und Objekten, wie etwa Fußgängern, Radfahrern, etc. erlaubt.

Eine Einsicht in das Sichtfeld A ist beispielsweise durch eine in einer Fahrzeugecke verbaute Videokamera möglich. Da typischerweise in den Fahrzeugecken die Fahrzeugleuchten angeordnet sind, bietet sich eine in einer Fahrzeugleuchte verbaute Videokamera, wie etwa für das rückwärts Ausparken eine in einer Heckleuchte angeordnete Videokamera an, um die Verkehrssicherheit zu steigern.

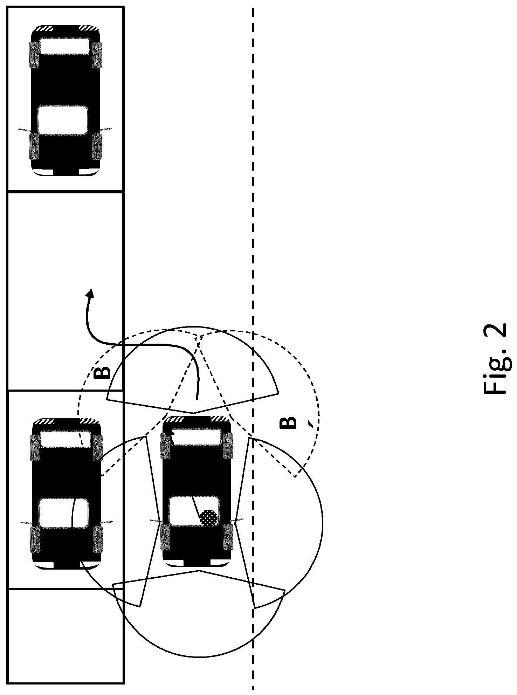

Für das zweite Anwendungsszenario des Surround-Views ist ein in Fig. 2 dargestelltes Sichtfeld B vorteilhaft. Das Sichtfeld B sieht vor, Entfernungen bis etwa 15 m mit einem horizontalen Winkel von etwa 180°, entsprechend 90° zu beiden Seiten in Bezug zur Fahrzeuglängsachse nach hinten einzusehen. Weiterhin beläuft sich der vertikale Sichtbereich in etwa 2 m Abstand vorteilhaft auf etwa 2 m in der Höhe.

Für den Fahrzeugführer ist im zweiten Anwendungsszenario eine visuelle Einschätzung des Geschehens im betreffenden Sichtfeld B unter geringstmöglicher Beeinträchtigung der Verkehrssicherheit erforderlich. Eine geringstmögliche Beeinträchtigung der Verkehrssicherheit liegt vor, wenn ein Einblick in des Sichtfeld B möglich ist, der eine visuelle Einschätzung des Verkehrsgeschehens und der Entfernung zu sich annähernden fremden Fahrzeugen und Objekten, wie etwa Fußgängern, Radfahrern, etc. erlaubt.

Das Sichtfeld B wird von den aktuell verbauten Weitwinkelvideokameras an Fahrzeugfront- und Fahrzeugheckmitte sowie den Seitenspiegeln nicht erfasst. Lediglich eine im Heckbereich des eigenen Fahrzeugs angeordnete Videokamera erlaubt einen Blick annähernd ins Sichtfeld B, welcher Blick jedoch beispielsweise zum Einfädeln in einen Verkehrsfluss in spitzem Winkel erst dann eine Einschätzung des Verkehrsgeschehens erlaubt, nachdem bereits eingefädelt wurde.

Um die durch das in Fig. 1 dargestellte Sichtfeld A und das in Fig. 2 dargestellte Sichtfeld B gebildeten interessierenden Sichtbereiche gleichzeitig visuell zu erfassen sind mehrere in einer Fahrzeugleuchte, beispielsweise in der Heckleuchte verbaute Videokameras denkbar, die jedoch Nachteile wie erhöhte und dadurch nicht wirtschaftliche Kosten und einen erhöhten Bauraumbedarf in der möglichst kompakten Heckleuchte haben. Auch erhöht sich hierdurch die Schwierigkeit mehrere Videokameras formgestaltungsverträglich in Fahrzeugleuchten zu integrieren.

Ein damit einhergehender Nachteil des Standes der Technik hinsichtlich Kosten, Konstruktions- und Herstellungsaufwand ist demnach, dass für jede Blickrichtung eine eigene Videokamera vorgesehen werden muss.

Um die interessierenden Sichtbereiche gleichzeitig zu erfassen, kann alternativ eine Weitwinkelvideokamera in eine Fahrzeugleuchte, beispielsweise in eine Heckleuchte integriert werden. Dabei kann das Sichtfeld der Videokamera eingeschränkt sein durch die Technik der Videokamera und/oder im Sichtfeld der Videokamera befindliche Gegenstände der Heckleuchte, wie etwa Blenden um die Videokamera herum. Das Sichtfeld einer Weitwinkelvideokamera müsste dabei so ausgerichtet sein, dass die Ränder des Sichtfelds den interessierenden Nahbereich nach unten und den interessierenden Fernbereich nach oben, sowie die ebenfalls von besonderem Interesse liegenden seitlichen Fernbereiche an den gegenüberliegenden Rändern des Videobilds widergegeben werden. Ausgerechnet die Ränder des Sichtfelds weisen bei Weitwinkelvideokameras jedoch die größten Verzerrungen auf. Damit ist eine Einschätzung des Geschehens durch den Fahrer in diesen Bereichen derart stark eingeschränkt, dass eine Nutzung des Videobilds keine nachhaltige Steigerung der Verkehrssicherheit zur Folge hätte.

Zusammengefasst helfen die bekannten Videokameraanordnungen bei diesen Szenarien nur sehr bedingt, da sie einerseits keinen Blick querab zulassen, und andererseits durch die blickrichtungsbedingt nach unten gerichtete, geringe Sichtweite sowie die überwiegend verwendeten Weitwinkelobjektive keine zuverlässige Einschätzung des Verkehrsgeschehens hinsichtlich Entfernung und Geschwindigkeit sich annähernder, fremder Fahrzeuge erlauben.

Darüber hinaus erlauben es die bekannten Videokameraanordnungen nicht, Entfernungen zuverlässig abzuschätzen oder gar zu messen.

Insbesondere jedoch die Entfernungsmessung mittels Videobildern kann in Verbindung mit den bestehenden Gesundheitsrisiken durch den bislang favorisierten Einsatz von RADAR-Technologie (RADAR - RAdio Detection And Ranging) zur Entfernungsmessung für das politisch angestrebte autonome Fahren zukünftig essentiell sein.

Eine Entfernungsmessung per Laser, auch bekannt als LIDAR (Light Detection And Ranging) stellt eine Alternative dar, um die bestehenden Gesundheitsrisiken durch RADAR-Technologie zu umgehen.

Aktuell wird LIDAR am Heck eines Fahrzeugs noch nicht eingesetzt. Ausnahmen sind autonome Versuchsfahrzeuge.

Um Entfernungen in den beschriebenen Anwendungsszenarien zu bestimmen, sind nach dem Stand der Technik verschiedene Sensoren denkbar und teilweise auch im Einsatz. Um Entfernungen zu Objekten im in Fig. 1 dargestellten Sichtfeld A zu erfassen werden vorzugsweise in der Heckstoßstange im Eckbereich RADAR-Sensoren verbaut. Um Entfernungen zu Objekten im in Fig. 2 dargestellten Sichtfeld B zu erfassen werden Ultraschallsensoren vorzugsweise in der Heckstoßstange im Eckbereich verbaut. Dabei werden nur Abstandsinformationen und keine visuellen Informationen des Geschehens im interessierenden Sichtbereich für den Fahrer generiert. Als Folge ist der Bauraum im Eck der für Schmutz empfindlichen Heckstoßstange bereits teilweise genutzt.

Zur Unterstützung eines Fahrzeugführers bietet sich daher eine Anordnung von Videokameras in den Fahrzeugleuchten an, die in den beschriebenen Anwendungsszenarien zuvorderst und zuhinterst als erstes in die Fahrbahn ragen.

Es gibt bereits Lösungen, eine Kamera hinter die Lichtscheibe in eine Fahrzeugleuchte, beispielsweise eine Heckleuchte zu integrieren, um visuelle Informationen zu erfassen.

Beispielsweise ist durch DE 10 2012 221 074 A1 eine Anordnung einer Videokamera in einer Fahrzeugleuchte bekannt. Die Videokamera blickt dabei durch einen Teil der Lichtscheibe eines Frontscheinwerfers.

Durch EP 3 531 393 A1 ist bekannt, eine mit Speichermitteln verbundene Videokamera zwecks Beweiserfassung beispielsweise in Folge eines durch drängeln und zu dichtem Auffahren verursachten Verkehrsunfalls in eine Fahrzeugleuchte zu integrieren.

Zusammengefasst ist es zwar grundsätzlich bekannt, beispielsweise am Heck oder am Bug und/oder in einer beispielsweise als Heckleuchte oder als Frontscheinwerfer ausgebildeten Fahrzeugleuchte eine Videokamera einzusetzen, beispielsweise zur Einparkhilfe, wie etwa als Rückfahrkamera. Ebenfalls bekannt ist auch eine Kombination mit anderen Sensoren, wie LIDAR, RADAR, Ultraschall. Dies ergibt ein Gesamtbild, jedoch kein zwingend visuelles Gesamtbild in der gesamten interessierenden Umgebung.

Hiernach gibt es außer des durch die Videokamera generierten Videobilds kaum Zusatznutzen durch die in Fahrzeugleuchten integrierten Videokameras nach dem Stand der Technik.

Eine Aufgabe der Erfindung ist es, möglichst kostengünstig eine Fahrzeugleuchte mit integrierter Videokamera bereitzustellen, welche weitere Potentiale aufweist, eine in die Fahrzeugleuchte eingesetzte Videokamera zu nutzen, um die Nutzereffizienz in der Fahrzeugleuchte zu steigern und damit die Verkehrssicherheit zu erhöhen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Der Gegenstand der Erfindung betrifft demnach eine Fahrzeugleuchte mit einer in deren von einem Leuchtengehäuse und einer Lichtscheibe wenigstens teilweise umgebenen Leuchteninnenraum zumindest zum Teil beherbergten Videokamera, welche durch wenigstens einen Abschnitt der Lichtscheibe blickt, wobei wenigstens einem Teil des Blickfelds der Videokamera zumindest ein in dem Leuchteninnenraum beherbergtes abbildendes optisches System vorgesetzt ist, vermittels welchen abbildenden optischen Systems der auf es - nämlich das abbildende optische System - gerichtete Teil des Blickfelds der Videokamera in eine von der Richtung des verbleibenden Teils des Blickfelds abweichende, andere Richtung umgelenkt wird.

Die in der beispielsweise als eine Heckleuchte ausgebildeten Fahrzeugleuchte hinter der Lichtscheibe eingesetzte Videokamera nimmt Bilder mehrerer Blickfelder auf. Dabei enthält die Videokamera in einem Videobild zusammengefasst das eigentliche Blickfeld der Videokamera sowie ein außerhalb des eigentlichen Videokamerablickfelds liegendes, auch als erweitertes Blickfeld bezeichnetes interessierendes Blickfeld. Dies können auch mehrere Blickfelder sein. Dabei wird das eigentliche Videokamerablickfeld im nicht interessierenden Blickbereich vom erweiterten Blickfeld verdeckt und im Videobild entsprechend ersetzt. Dazu wird die Videokamera in Kombination mit einem abbildenden System, wie etwa einem Spiegel, einem Prisma, etc. in der beispielsweise als Heckleuchte oder als Bugscheinwerfer ausgebildeten Fahrzeugleuchte eingesetzt.

Das abbildende optische System bildet damit ein System zur Erweiterung der Sichtbereiche einer Videokamera.

Technische Vorteile ergeben sich durch eine Verringerung der notwendigen Anzahl von Videokameras auf nur eine Videokamera zur Abdeckung mehrerer unterschiedlicher Blickrichtungen, wie etwa einer ersten Blickrichtung in einen Nahbereich eines Sichtfelds und einer zweiten Blickrichtung in einen Fernbereich eines Sichtfelds, einhergehend mit einem zumindest verzerrungsarmen Videobild aller Blickrichtungen.

Im Vergleich zu einer Videokamera in einer Fahrzeugleuchte ohne zusätzliche abbildende Systeme, können mehrere, beispielsweise extreme Blickfelder bei gleichzeitig vergleichsweise kompakter Bauweise erfasst werden. Da die Videokamera dadurch mehr Freiheitsgrade in ihrer Positionierung, wie etwa hinsichtlich Winkel, Bauraum, usw. aufweist, sind auch erweiterte Möglichkeiten für die Formgestaltung der Fahrzeugleuchte, beispielsweise deren Lichtscheibe möglich.

Nachdem der sinnvoll funktionierende Einbau einer Videokamera mit vorgegebenem Sichtfeld in die Fahrzeugleuchte hinter der Lichtscheibe in direktem Zusammenhang mit der Geometrie und der Formgestaltung der Lichtscheibe und damit der Fahrzeugleuchte steht, was bei einer nach dem Stand der Technik zur Abdeckung beispielsweise extremer Blickfelder vorgegebenen Notwendigkeit des Einbaus mehrerer Videokameras entsprechende Anforderungen zur Folge hat, die den Entwickler der Fahrzeugleuchte stark einschränken, werden derartige Einschränkungen durch die erfindungsgemäße Lösung vollständig aufgehoben, weil das abbildende optische System eine Umlenkung der Blickrichtung einer auch in solchen Bereichen des Leuchteninnenraums beherbergten Videokamera zulässt, von wo aus deren eigentliches Blickfeld ein interessierendes Blickfeld zumindest teilweise gar nicht erreichen könnte.

Ebenso sind erweiterte Möglichkeiten und Zusatznutzen durch das Vorhandensein mehrerer Blickfelder möglich, die nachfolgend noch beschrieben werden.

Ein wirtschaftlicher Vorteil dieser Erfindung neben der Tatsache, dass nur eine Videokamera benötigt wird pro Heckleuchte, ist die Möglichkeit des Einsatzes bereits bekannter, gängiger und vergleichsweise günstiger Herstellungsverfahren aus dem Bereich der Heckleuchten für das abbildende optische System.

Die Erfindung ermöglicht eine Erfassung mehrerer Blickfelder mit nur einer in einer Fahrzeugleuchte beherbergten, statischen, gegenüber dem Leuchtengehäuse unbeweglich angeordneten Videokamera.

Eine vollständige Lösung der zu Grunde liegenden Aufgabe der Erfindung unter Beseitigung sämtlicher Nachteile des Standes der Technik wird demnach erhalten mittels einer Fahrzeugleuchte, beispielsweise einer Heckleuchte, einem Frontscheinwerfer, einer Tagfahrleuchte oder einer beispielsweise hochgesetzten, dritten Heckleuchte, mit einer in deren von einem Leuchtengehäuse und einer Lichtscheibe wenigstens teilweise umgebenden Leuchteninnenraum beherbergten Videokamera, welche durch wenigstens einen Abschnitt der Lichtscheibe blickt.

Einem Teil des Blickfelds der Videokamera vorgesetzt ist ein abbildendes optisches System, wie etwa ein Spiegel oder ein Prisma in dem Leuchteninnenraum beherbergt.

Der auf das abbildende optische System gerichtete Teil des Blickfelds der Videokamera wird durch das abbildende optische System in eine von der Richtung des verbleibenden Teils des Blickfelds abweichende, andere Richtung umgelenkt, beispielsweise in einen Fern- oder in einen Nahbereich, je nachdem, ob der verbleibende Teil des Blickfelds auf einen Nah- oder Fernbereich der Fahrzeugumgebung gerichtet ist, oder beispielsweise in eine dem verbleibenden Teil des Blickfelds der Videokamera abgewandte, beispielsweise entgegengesetzte Richtung.

Grundsätzlich kann das Blickfeld durch das abbildende optische System beliebig mehrgeteilt sein.

Es ist ersichtlich, dass die Erfindung zur Lösung der ihr zugrunde liegenden Aufgabe ein in eine eine Videokamera beherbergende Fahrzeugleuchte integriertes abbildendes optisches System zur Erweiterung der Sichtbereiche der Videokamera vorsieht.

Die Kombination aus Videokamera und abbildendem optischem System führt zu einem Videobild mit verschiedenen Blickwinkeln. Durch die Videokamera allein kann ein diesem Videobild entsprechendes Blickfeld dabei nicht nutzbar für den Anwender erfasst werden, beispielsweise wegen Blendung von Umgebung außen und daraus resultierendem anderen Aufbau.

Als abbildendes optisches System in Kombination mit der Videokamera integriert in die beispielsweise als Heckleuchte ausgeführte Fahrzeugleuchte kommen verschiedene Möglichkeiten und Konstellationen in Betracht, wie etwa ein Spiegel oder ein Prisma, die nachfolgend noch aufgeführt werden.

Die Fahrzeugleuchte kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein für ein erstes Anwendungsszenario eines Ausfahrens aus engen Gassen vorteilhaftes Sichtfeld A in einer Draufsicht.
- Fig. 2: ein für ein zweites Anwendungsszenario einer auch als Suround-View bezeichneten Umsicht vorteilhaftes Sichtfeld B in einer Draufsicht.

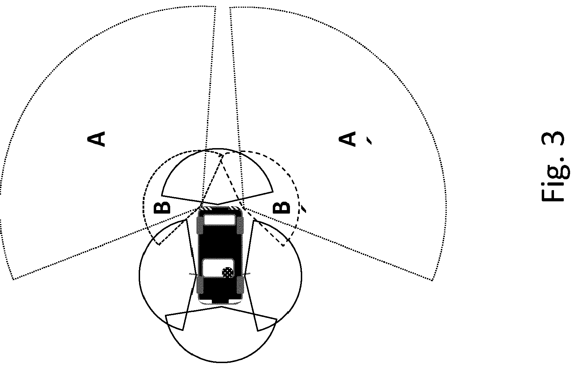

- Fig. 3: die Sichtfelder A und B aus Fig. 1 und Fig. 2 in Bezug auf mittels verfügbarer Sensortechnik abgedeckten Bereiche im Umfeld eines Fahrzeugs in einer Draufsicht.

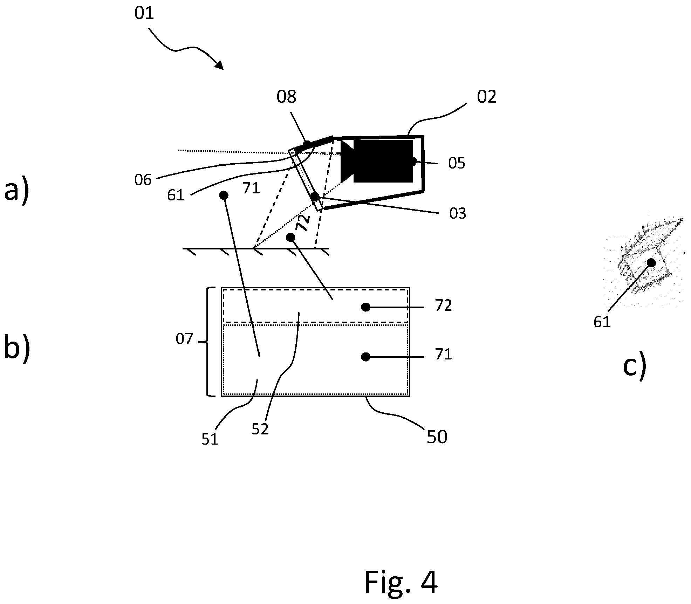

- Fig. 4: ein erstes Ausführungsbeispiel einer Fahrzeugleuchte mit in diese integrierter, durch einen Abschnitt deren Lichtscheibe 03 blickender Videokamera 05 und einem dieser teilweise vorgesetztem optischen System 06, welches ein eigentliches Blickfeld 71 der Videokamera 05 in die Ferne und ein interessierendes Blickfeld 72 in die Nähe mit einem als Blende 08 ausgeführten Spiegel 61 ermöglicht, in einem Längsschnitt in Fig. 4 a) und ein von einer in die Fahrzeugleuchte aus Fig. 4 a) integrierten Videokamera aufgenommenes Videokamerabild in Fig. 4 b) in einer Draufsicht, sowie in Fig. 4 c) einen aus mehreren Facetten bestehenden Spiegel 61 als optisches System 06 oder als Teil eines optischen Systems 06, um mehrere Blickrichtungen zu erhalten, in perspektivischer Ansicht.

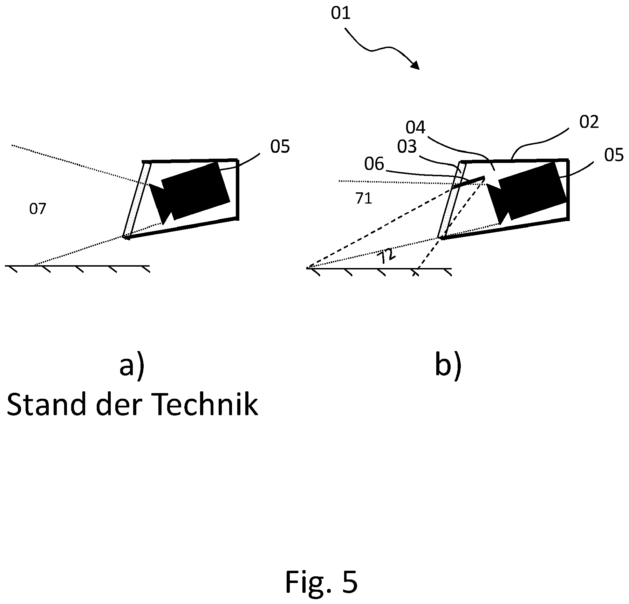

- Fig. 5: eine Fahrzeugleuchte mit in diese integrierter, durch einen Abschnitt deren Lichtscheibe blickender Videokamera nach dem Stand der Technik in Fig. 5 a) und ein zweites Ausführungsbeispiel einer Fahrzeugleuchte 01 mit in diese integrierter, durch einen Abschnitt deren Lichtscheibe 03 blickender Videokamera 05 und einem dieser teilweise vorgesetztem optischen System 06 in Fig. 5 b), welches unter Nutzung des Vorteils eines erhöhter Sichtbereichs bei Einsatz eines Spiegels 61 bei nach außen geneigter Lichtscheibe 03 ein eigentliches Blickfeld 71 der Videokamera 05 in die Ferne und ein interessierendes Blickfeld 72 in die Nähe ermöglicht, jeweils in einem Längsschnitt.

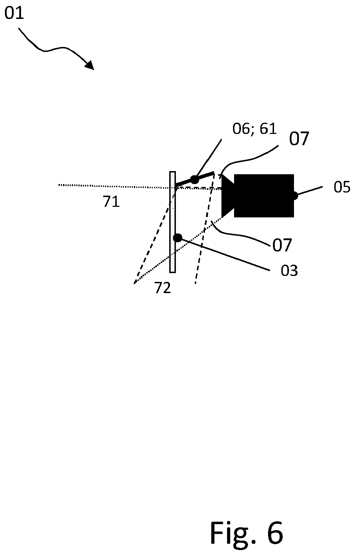

- Fig. 6: eine Detailansicht eines dritten Ausführungsbeispiels einer im Leuchteninnenraum einer Fahrzeugleuchte hinter deren Lichtscheibe angeordneten Videokamera mit einem teil-vorgesetzten, einen Einblick in ein extremes Sichtfeld ermöglichenden abbildendem optischem System 06 in einem Längsschnitt.

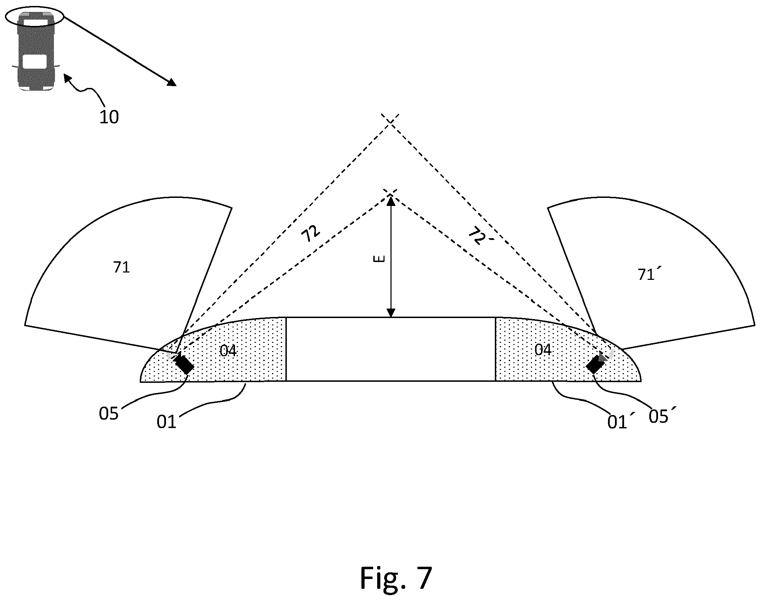

- Fig. 7: die mittels gemäß in Fig. 6 dargestellter Anordnung des teil-vorgesetzten abbildenden optischen Systems in beidseitig eines Fahrzeughecks angeordnete Fahrzeugleuchten integrierten Videokameras erfassbaren Sichtfelder in einer Draufsicht.

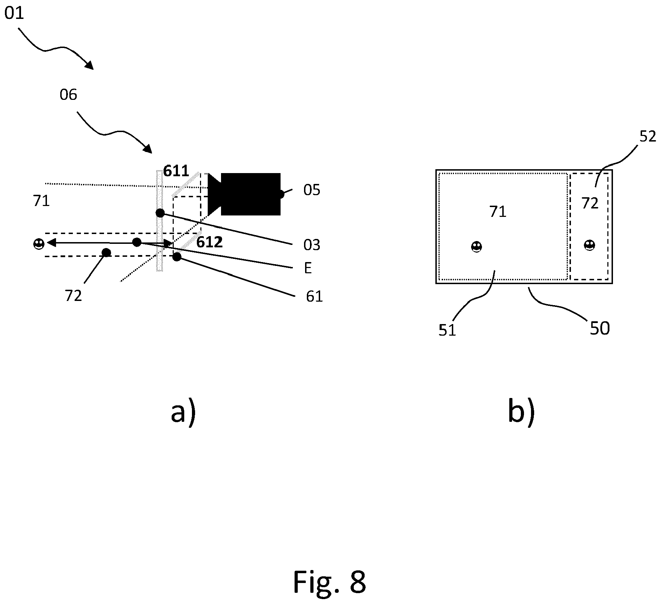

- Fig. 8: eine Detailansicht eines vierten Ausführungsbeispiels einer Fahrzeugleuchte 01 mit in diese integrierter, durch einen Abschnitt deren Lichtscheibe 03 blickender Videokamera 05 und einem dieser teilweise vorgesetztem optischen System 06 in einem Längsschnitt, welches unter Nutzung des Vorteils einer Stereokamera-Funktionalität mittels eines durch Einsatz einer zwei Spiegel 611, 612 umfassenden Doppelspiegelanordnung erhaltenen versetzten Blicks in das im eigentlichen Blickfeld 71 liegende interessierende Blickfeld 72 eine Entfernungsmessung zu im interessierenden Blickfeld 72 befindlichen Objekten ermöglicht in Fig. 8 a) und ein von der in die Fahrzeugleuchte aus Fig. 8 a) integrierten Videokamera aufgenommenes, in eine das eigentliche Blickfeld 71 widergebende Partie und in eine das interessierende Blickfeld 72 widergebende zweite Partie aufgeteiltes Videokamerabild 50 in Fig. 8 b) in einer Draufsicht.

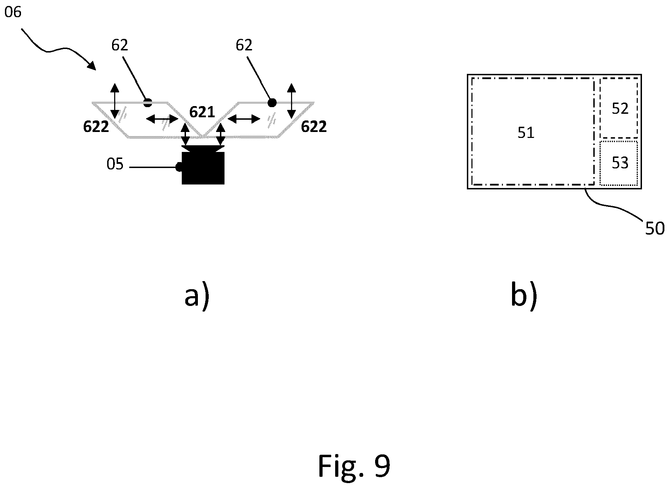

- Fig. 9: eine Detailansicht eines fünften Ausführungsbeispiels einer Fahrzeugleuchte 01 mit in diese integrierter, durch einen Abschnitt deren Lichtscheibe 03 blickender Videokamera 05 und einem dieser teilweise vorgesetztem optischen System 06in einem Längsschnitt, welches mittels durch Einsatz zweier Prismen 62 mit jeweils zwei reflektierenden Prismenflächen 621, 622 erhaltener versetzter Blicke in das interessierende Blickfeld 72 eine Entfernungsmessung zu im interessierenden Blickfeld 72 befindlichen Objekten ermöglicht, wohingegen eine zusätzliche Blickrichtung durch das eigentliche Blickfeld 71 der Videokamera 05 möglich ist in Fig. 9 a) und ein von der in die Fahrzeugleuchte aus Fig. 9 a) integrierten Videokamera aufgenommenes, in eine den ersten Blick in das interessierende Blickfeld 72 widergebende erste Partie 51, eine den zweiten Blick in das interessierende Blickfeld 72 widergebende zweite Partie 52 und eine das eigentliche Blickfeld 71 widergebende dritte Partie 53 aufgeteiltes Videokamerabild 50 in Fig. 9 b) in einer Draufsicht.

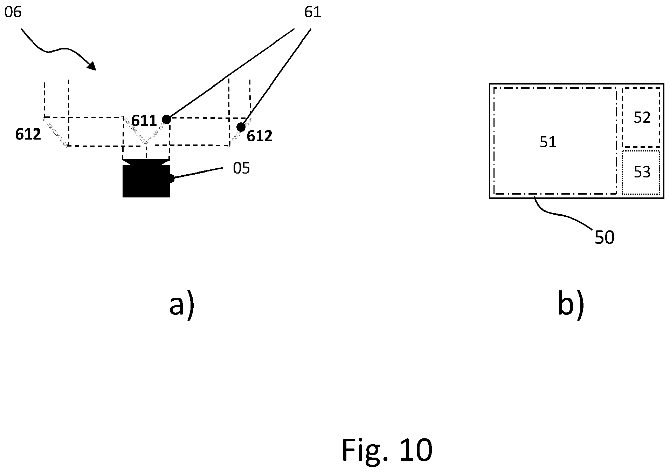

- Fig. 10: eine Detailansicht eines sechsten Ausführungsbeispiels einer Fahrzeugleuchte 01 mit in diese integrierter, durch einen Abschnitt deren Lichtscheibe 03 blickender Videokamera 05 und einem dieser teilweise vorgesetztem optischen System 06in einem Längsschnitt, welches mittels durch Einsatz zweier jeweils zwei Spiegel 611, 612 umfassender Doppelspiegelanordnungen erhaltener versetzter Blicke in das interessierende Blickfeld 72 eine Entfernungsmessung zu im interessierenden Blickfeld 72 befindlichen Objekten ermöglicht, wohingegen eine zusätzliche Blickrichtung durch das eigentliche Blickfeld 71 der Videokamera 05 möglich ist in Fig. 10 a) und ein von der in die Fahrzeugleuchte aus Fig. 10 a) integrierten Videokamera aufgenommenes, in eine den ersten Blick in das interessierende Blickfeld 72 widergebende erste Partie 51, eine den zweiten Blick in das interessierende Blickfeld 72 widergebende zweite Partie 52 und eine das eigentliche Blickfeld 71 widergebende dritte Partie 53 aufgeteiltes Videokamerabild 50 in Fig. 10 b) in einer Draufsicht.

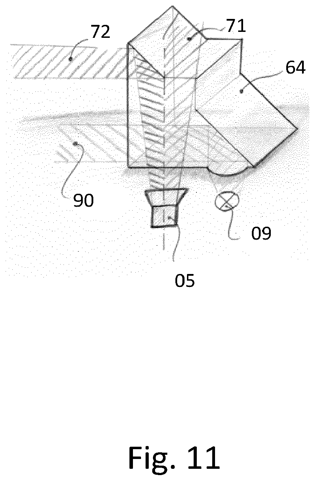

- Fig. 11: eine Detailansicht eines ersten Ausführungsbeispiels einer in ein optisches System 06 integrierten Beleuchtung, beispielsweise einer Arbeitsbeleuchtung, welches optische System 06 einer in eine Fahrzeugleuchte 01 integrierten, durch einen Abschnitt deren Lichtscheibe 03 blickenden Videokamera 05 zum Teil vorsetzbar ist, beispielsweise um unter Umgehung des optischen Systems 06 ein eigentliches Blickfeld 71 der Videokamera 05 in die Ferne und unter Umlenkung vermittels des optischen Systems 06 ein interessierendes Blickfeld 72 in die Nähe zu ermöglichen, in perspektivischer Ansicht.

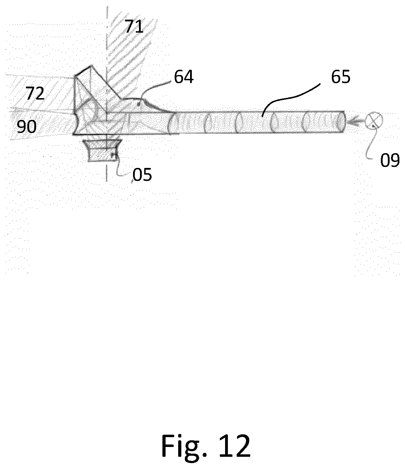

- Fig. 12: eine Detailansicht eines zweiten Ausführungsbeispiels einer in ein optisches System 06 integrierten Beleuchtung, beispielsweise einer Arbeitsbeleuchtung, welches optische System 06 einer in eine Fahrzeugleuchte 01 integrierten, durch einen Abschnitt deren Lichtscheibe 03 blickenden Videokamera 05 zum Teil vorsetzbar ist, beispielsweise um unter Umgehung des optischen Systems 06 ein eigentliches Blickfeld 71 der Videokamera 05 in die Ferne und unter Umlenkung vermittels des optischen Systems 06 ein interessierendes Blickfeld 72 in die Nähe zu ermöglichen, in perspektivischer Ansicht.

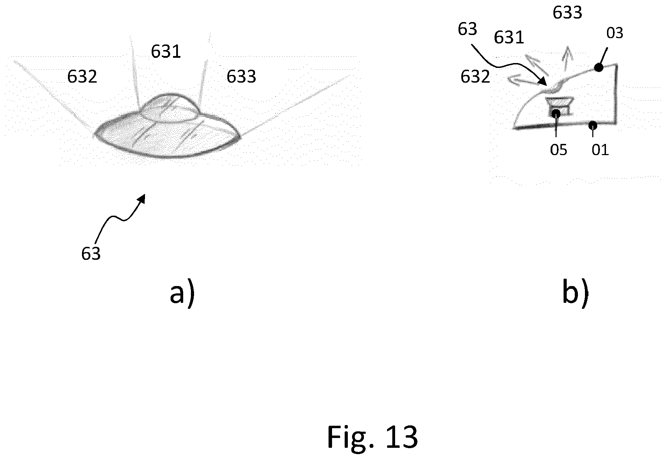

- Fig. 13: ein Ausführungsbeispiel einer in eine Lichtscheibe 03 einer Fahrzeugleuchte 01 als einer in die Fahrzeugleuchte integrierten Videokamera 05 teil-vorsetztbares optisches System 06 integrierbaren Linse 63 in einer perspektivischen Ansicht in Fig. 13 a) und eine Fahrzeugleuchte 01 mit integrierter Videokamera 05 und dieser teilvorgesetzter, in die Lichtscheibe 03 integrierter Linse 63 aus Fig. 13 a) als optisches System 06 in einem Längsschnitt in Fig. 13 b).

Eine in Fig. 4 a), Fig. 5 b), Fig. 6, Fig. 8 a), Fig. 9 a), Fig. 10 a), Fig. 11, Fig. 12, Fig. 13 b) ganz oder in Teilen dargestellte Fahrzeugleuchte 01 umfasst:
- einen von einem Leuchtengehäuse 02 und einer Lichtscheibe 03 wenigstens teilweise umgebenen Leuchteninnenraum 04 und
- eine in deren Leuchteninnenraum 04 zumindest zum Teil beherbergte Videokamera 05.

Die Videokamera 05 blickt durch wenigstens einen Abschnitt der Lichtscheibe 03. Wenigstens einem Teil des Blickfelds der Videokamera 05 ist zumindest ein in dem Leuchteninnenraum 04 beherbergtes abbildendes optisches System 06 vorgesetzt, beispielsweise ein Spiegel 61 und/oder ein Prisma 62. Vermittels des abbildenden optischen Systems 06 wird der auf es - nämlich auf das abbildende optische System 06 - gerichtete Teil des Blickfelds 07 der Videokamera 05 auf mindestens ein in einer von der Richtung des auch als eigentliches Blickfeld 71 bezeichneten, verbleibenden Teils des Blickfelds abweichenden, anderen Richtung liegendes, interessierendes Blickfeld 72 umgelenkt.

Der auf es - nämlich auf das abbildende optische System 06 - gerichtete Teil des Blickfelds 07 der Videokamera 05 wird demzufolge auf mindestens ein interessierendes Blickfeld 72 in eine von der Richtung des verbleibenden Teils des Blickfelds 07 abweichende, andere Richtung umgelenkt.

Demnach wird der auf das abbildende optische System 06 gerichtete Teil des Blickfelds 07 der Videokamera 05 in eine von der Richtung des verbleibenden Teils des Blickfelds 07 abweichende, andere Richtung auf mindestens ein interessierendes Blickfeld 72 umgelenkt.

Hierdurch wird eine Fahrzeugleuchte 01 geschaffen mit einem mit wenigstens einer Lichtöffnung versehenen Leuchtengehäuse 02 und wenigstens einer die Lichtöffnung mindestens teilweise verschließenden Lichtscheibe 03, welches Leuchtengehäuse 02 und welche mindestens eine Lichtscheibe 03 einen Leuchteninnenraum 04 der Fahrzeugleuchte 01 zumindest teilweise umschließen.

In dem von dem Leuchtengehäuse 02 und der mindestens einen Lichtscheibe 03 zumindest teilweise umschlossenen Leuchteninnenraum 04 ist eine videobildgebende Videokamera 05 mit einem von dem Videokamerabild 50 widergebbaren Blickfeld 07 wenigstens teilweise beherbergt. Das Blickfeld 07 ist zumindest teilweise durch die Lichtscheibe 03 hindurch nach außerhalb des Leuchteninnenraums 04 gerichtet. Das Blickfeld 07 ist in mindestens ein ein erstes Sichtfeld der Videokamera 05 bildendes eigentliches Blickfeld 71 und in mindestens ein ein zweites Sichtfeld der Videokamera 05 bildendes, nicht interessierendes Blickfeld in eine der Gesamtzahl der Sichtfelder entsprechende Anzahl von Teilen des Blickfelds 07 mehrgeteilt.

Ein vom eigentlichen Blickfeld 71 umfasster und von dem mindestens einen ersten Sichtfeld gebildeter erster Teil des Blickfelds 07 ist durch die Lichtscheibe 03 hindurch auf ein erstes Zielgebiet gerichtet.

Ein vom nicht interessierenden Blickfeld umfasster und von dem mindestens einen zweiten Sichtfeld gebildeter zweiter Teil des Blickfelds 07 ist auf mindestens ein im Leuchteninnenraum 04 beherbergtes, abbildendes optisches System 06 gerichtet. Das mindestens eine abbildende optische System 06 lenkt den zweiten Teil des Blickfelds 07 ebenfalls durch die Lichtscheibe 03 hindurch in ein von dem ersten Zielgebiet verschiedenes, das interessierende Blickfeld 72 umfassendes und/oder vom interessierenden Blickfeld 72 umfasstes zweites Zielgebiet um.

Das Blickfeld 07 der Videokamera 05 erfasst damit das im eigentlichen Blickfeld 71 der Videokamera 05 liegende erste Zielgebiet und über die Umlenkung vermittels des im nicht interessierenden Blickfeld angeordneten abbildenden optischen Systems 05 das das interessierende Blickfeld 72 umfassende zweite Zielgebiet.

Hierdurch ist eine unmittelbare, gemeinsame bildliche Wiedergabe beider Zielgebiete im Videokamerabild 50 geschaffen.

Sowohl das interessierende Blickfeld 72, als auch der auch als eigentliches Blickfeld 71 bezeichnete verbleibende Teil des Blickfelds sind in ein für ein jeweiliges Anwendungsszenario vorteilhaftes Sichtfeld gerichtet, beispielsweise in ein in Fig. 1 dargestelltes und für ein erstes Anwendungsszenario eines Ausfahrens aus engen Gassen vorteilhaftes Sichtfeld A, oder in ein in Fig. 2 dargestelltes und für ein zweites Anwendungsszenario einer auch als Surround-View bezeichneten Umsicht vorteilhaftes Sichtfeld B, oder auf Teile hiervon.

Alternativ oder zusätzlich kann das interessierende Blickfeld 72 beispielsweise in das in Fig. 1 dargestellte und für das erste Anwendungsszenario eines Ausfahrens aus engen Gassen vorteilhafte Sichtfeld A und der auch als eigentliches Blickfeld 71 bezeichnete verbleibende Teil des Blickfelds 07 in das in Fig. 2 dargestellte und für das zweite Anwendungsszenario einer auch als Surround-View bezeichneten Umsicht vorteilhaftes Sichtfeld B gerichtet sein, wie dies in Fig. 6 und Fig. 7 beispielhaft dargestellt ist.

Dabei entspricht das Sichtfeld A aus Fig. 1 und Fig. 3 dem eigentlichen Blickfeld 71 in Fig. 7 und das Sichtfeld A' aus Fig. 3 dem eigentlichen Blickfeld 71' in Fig. 7. Ferner ist das interessierende Blickfeld 72 in einen vom Sichtfeld A nicht abgedeckten Teil des Sichtfelds B aus Fig. 2 und Fig. 3 gerichtet, wohingegen das interessierende Blickfeld 72' in einen vom Sichtfeld A' nicht abgedeckten Teil des Sichtfelds B' aus Fig. 2 und Fig. 3 gerichtet ist.

Hierdurch können das interessierende Blickfeld 72 beziehungsweise 72' auf das Sichtfeld A beziehungsweise A' optimiert und das eigentliche Blickfeld 71 beziehungsweise 71' auf das Sichtfeld B beziehungsweise B' optimiert sein, so dass in einem beide Sichtfelder A und B wiedergebenden Videokamerabild 50 Verzerrungen beispielsweise in der Weite und Verzerrungen beispielsweise in der Nähe weitgehend vermieden werden.

Wichtig ist hervorzuheben, dass auch eine umgekehrte Auslegung möglich ist, wobei das interessierende Blickfeld 72 auf das Sichtfeld B und entsprechend das interessierende Blickfeld 72' auf das Sichtfeld B' gerichtet und dementsprechend auf dessen Ausdehnung optimiert ist, und das eigentliche Blickfeld 71 auf das Sichtfeld A und entsprechend das eigentliche Blickfeld 71' auf das Sichtfeld A' gerichtet und dementsprechend auf dessen Ausdehnung optimiert ist.

Ebenfalls wichtig ist hervorzuheben, dass das interessierende Blickfeld 72, 72' und das eigentliche Blickfeld 71, 71' vorteilhaft auf Teile des Sichtfelds A und des Sichtfelds B gerichtet sind, die auf derselben Seite in Bezug auf eine Fahrzeuglängsachse liegen. In Fig. 1 ist hierzu lediglich ein solcher Teil des Sichtfelds A punktiert umrandet dargestellt und mit A bezeichnet, der in Bezug auf eine Fahrzeuglängsachse hinten rechts liegt. In Fig. 2 ist der gestrichelt umrandet dargestellte Teil des Sichtfelds B, der in Bezug auf die Fahrzeuglängsachse hinten rechts liegt ebenfalls mit B bezeichnet und derjenige gestrichelt umrandet dargestellte Teil des Sichtfelds B, der in Bezug auf eine Fahrzeuglängsachse hinten links liegt mit B' bezeichnet. In Fig. 3 sind der punktiert umrandet dargestellte Teil des Sichtfelds A, der in Bezug auf die Fahrzeuglängsachse hinten rechts liegt mit A bezeichnet und der punktiert umrandet dargestellte Teil des Sichtfelds A, der in Bezug auf die Fahrzeuglängsachse hinten rechts liegt mit A' bezeichnet. Ferner sind in Fig. 3 der gestrichelt umrandet dargestellte Teil des Sichtfelds B, der in Bezug auf die Fahrzeuglängsachse hinten rechts liegt ebenfalls mit B bezeichnet und derjenige gestrichelt umrandet dargestellte Teil des Sichtfelds B, der in Bezug auf eine Fahrzeuglängsachse hinten links liegt mit B' bezeichnet.

Beispielsweise kann das abbildende optische System 06 den auf es gerichteten, zweiten Teil des Blickfelds 07 der Videokamera 05 durch Reflexion ins zweite Zielgebiet auf das interessierende Blickfeld 72 umlenkt.

Das abbildende optische System 05 kann hierzu einen (Fig. 4 a), Fig. 5 b), Fig. 6 oder mehrere Spiegel 61 (Fig. 8 a), Fig. 10 a)) umfassen.

Alternativ oder zusätzlich kann das abbildende optische System 05 hierzu ein TIR-Element (TIR - Total Internal Reflection), wie etwa ein Prismenelement 62, umfassen, in dem eine Umlenkung des auf das abbildende optische System 05 gerichteten, zweiten Teils des Blickfelds 07 der Videokamera 05 durch Totalreflexion erfolgt (Fig. 9 a), Fig. 11, Fig. 12).

Eine vorteilhafte Weiterbildung sieht vor, dass das abbildende optische System 05 beispielsweise wie in Fig. 9 oder in Fig. 10 dargestellt den auf es gerichteten, zweiten Teil des Blickfelds 07 der Videokamera 05 in entgegengesetzte Richtungen entlang einer Basislinie aufteilt und an entlang der Basislinie beabstandeten Punkten wiederum in das selbe vom interessierenden Blickfeld 72 umfasste und/oder dieses umfassende zweite Zielgebiet umlenkt, um eine Abstandsmessung zu in dem vom interessierenden Blickfeld 72 umfasste und/oder dieses umfassende zweite Zielgebiet befindlichen Objekten zu ermöglichen.

Das in Fig. 9 b) oder das in Fig. 10 b) dargestellte Videokamerabild 50 weist zumindest eine erste Partie 51 und eine zweite Partie 52 auf, welche die beiden von den entlang der Basislinie voneinander beabstandeten Punkten aufgenommenen Ansichten des interessierenden Blickfelds 72 zeigen. Eine dritte Partie 53 des Videokamerabilds 50 kann einen zusätzlichen Blick zur Seite oder einen zusätzlichen Blick in einen Nah- oder Fernbereich widergeben.

Eine solche Anordnung erlaubt eine Entfernungsmessung zu videobildtechnisch im interessierenden Blickfeld erfassten und/oder erkannten Objekten.

Grundsätzlich können die Ein- und Aufteilung des Videokamerabilds 50 ebenso wie die Größe und Anordnung der verschiedenen Partien 51, 52, 53 im Videokamerabild 50 von deren Darstellungen in Fig. 9 b) und in Fig. 10 b) abweichen.

Eine vorteilhafte Weiterbildung der Erfindung zeichnet sich aus durch einen im durch wenigstens einen Abschnitt der Lichtscheibe 03 hindurch umlenkungsfreien, geraden Blickfeld 07 der Videokamera 05 liegenden Fernbereich, wie in Fig. 4 a), Fig. 5 b), Fig. 6, Fig. 8 a), Fig. 8 b), dargestellt.

Das vom eigentlichen Blickfeld 71 der Videokamera durch die Lichtscheibe 03 hindurch erfasste und von mindestens einem dem ersten Teil des Blickfelds 07 entsprechenden ersten Sichtfeld gebildete erste Zielgebiet umfasst demnach bevorzugt einen im umlenkungsfreien, geraden Blickfeld 07 der Videokamera 05 liegenden Fernbereich.

Beispielsweise kann das in das zweite Zielgebiet umgelenkte, in einer von der Richtung des eigentlichen Blickfelds 71 und/oder des verbleibenden Teils des Blickfelds 07 abweichenden, anderen Richtung liegende interessierende Blickfeld 72 einen außerhalb des umlenkungsfreien, graden Blickfelds 07 der Videokamera 05 liegenden Nahbereich umfasst.

Alternativ können die Zuordnung von Fern- und Nahbereich zu dem eigentlichen Blickfeld 71 und dem interessierenden Blickfeld 72 auch getauscht werden, je nach Anwendungsfall und/oder anwendungsspezifisch konstruktiv einfacherer Umsetzung.

Das abbildende optische System 06 kann hinter einer Blende 08 angeordnet sein oder selbst Teil einer Blende 08 sein, wie dies im in Fig. 4 gezeigten Ausführungsbeispiel der Fall ist.

Eine besonders vorteilhafte Ausgestaltung der Erfindung sieht vor, dass das abbildende optische System 06 eine integrierte Beleuchtung umfasst.

Hierdurch wird eine integrierte Beleuchtung beispielsweise bei einer Verwirklichung einer Strahlaufteilung bei einer Videokamera 05 mit Prisma und/oder TIR-Optik geschaffen.

Auf die voranstehend bereits beschriebenen Ausgestaltungen der Fahrzeugleuchte 01 wird nachfolgend nochmals eingegangen unter Aufführung zusätzlicher, über die vollständige Lösung der der Erfindung zu Grunde liegenden Aufgabe und/oder über die voran zu den einzelnen Merkmalen genannten Vorteile hinausgehende Vorteile gegenüber dem Stand der Technik.

Die in der beispielsweise als eine Heckleuchte ausgeführten Fahrzeugleuchte 01 hinter der Lichtscheibe 03 eingesetzte Videokamera 05 nimmt Bilder mehrerer Blickfelder auf. Dabei enthält die Videokamera 05 in einem Videobild 50 zusammengefasst das eigentliche Blickfeld 71 der Videokamera 05 sowie ein Videobild eines außerhalb des eigentlichen Videokamerablickfelds liegenden interessierenden Blickfelds 72 (Fig. 4). Dies können auch mehrere interessierende Blickfelder 72 sein. Dabei wird das eigentliche Videokamerablickfeld im nicht interessierenden Blickbereich vom erweiterten Blickfeld verdeckt und dadurch ersetzt. Dazu wird die Videokamera 05 in Kombination mit einem abbildenden optischen System 06, wie etwa einem oder mehreren Spiegeln 61 und/oder einem oder mehreren Prismen 62, etc. in der beispielsweise als Heckleuchte oder als Bugscheinwerfer ausgebildeten Fahrzeugleuchte 01 eingesetzt.

Jeder dieser Konstellationen bzw. Kombination aus Videokamera 05 und abbildendem optischem System 06 gemeinsam ist vorteilhaft eine umhüllende Blende und die direkte Position hinter der Lichtscheibe (Fig. 5b). Diese umhüllende Blende ist auch ohne abbildendes optisches System 06 bei einer Fahrzeugleuchte nach dem Stand der Technik (Fig. 5 a)) denkbar. Die umhüllende Blende bildet vorteilhaft eine Videokamerakammer mit einer durch einen Abschnitt der Lichtscheibe 03 oder durch eine eigene Lichtscheibe 03 verschlossenen Videokameraöffnung innerhalb des Leuchteninnenraums 04. Die umhüllende Blende dient der Vermeidung der Beeinflussung des Videokamerabilds 50 durch in der beispielsweise als Heckleuchte ausgeführten Fahrzeugleuchte 01 erzeugte Effekte. Solche Effekte können beispielsweise von der Fahrzeugleuchte erfüllbare Lichtfunktionen und/oder Reflexionen an der Lichtscheibe 03 umfassen.

Alternativ oder zusätzlich kann das abbildende optische System 06 eine Blende 08 umfassen. Beispielsweise kann das abbildende optische System 06 einen Spiegel 61 umfassen, dessen der Lichtscheibe 03 zu- und der Videokamera 05 abgewandte Seite als Blende 08 ausgeführt ist. Mit anderen Worten ist die Blende 08 auf ihrer der Videokamera 05 zugewandten Seite als ein Spiegel 61 ausgebildet, der zumindest Teil des abbildenden optischen Systems 06 sein kann.

Der Blendenteil und/oder die Blende 08 oberhalb der Videokamera 05 schützt das Videokamerabild 50 vor Blendung von Licht von außen, wie etwa vor Sonneneinstrahlung und/oder Umgebungslicht, wie etwa einer Straßenbeleuchtung, eines fremden Fahrzeugs oder eines andere Verkehrsteilnehmers. Durch in Verbindung mit Fremdlichteinstrahlung einhergehend verschlechterte und für den Nutzer nicht direkt nutzbare Videokamerabilder werden damit vermieden.

Die Lichtscheibe 03 ist an der für das Kamerabild relevanten Position entsprechend in dem Abschnitt, durch welchen die Videokamera 05 durch sie hindurch blickt, vorzugsweise transparent und glasklar ausgeführt. Vorteilhaft kann sie farblos ausgeführt sein, um für das Videokamerabild 50 eine realitätsnahe Farbaufnahme zu ermöglichen.

Eine vorteilhafte Weiterbildung der Erfindung kann vorsehen, beispielsweise hinter der Lichtscheibe 03 oder in dem Abschnitt, durch welchen die Videokamera 05 durch sie hindurch blickt, ein farblich schaltbares Glas anzuordnen, welches zwischen transparent und einem opaken, beispielsweise schwarzen Zustand schaltbar ist, um die Videokamera 05 bei Nichtverwendung beispielsweise in einem so genannten Offline-Zustand in der insbesondere als Heckleuchte ausgeführten Fahrzeugleuchte 01 zu verstecken. Das schaltbare Glas ist auch als Blende zum Schutz vor äußeren Lichteinflüssen denkbar.

Bei dem in Fig. 4 a) gezeigten Ausführungsbeispiel einer Fahrzeugleuchte 01 mit in deren Leuchteninnenraum 04 integrierter, durch einen Abschnitt deren Lichtscheibe 03 blickender Videokamera 05 und einem dieser teilweise vorgesetztem optischen System 06 umfasst das optische System 06 einen Spiegel 61 als zusätzliche Blende 08 oberhalb der Kamera.

Dieses Prinzip ermöglicht einen direkten Kamerablick in die Ferne und über den oberhalb der Videokamera 05 angeordneten Spiegel 61 beispielsweise auch den Blick in die Nähe. Der Spiegel 61 befindet sich im direkten Blickfeld 07 der Videokamera 05. Der Spiegel 61 ist gleichzeitig die Blende 08 zur Erzeugung eines für den Nutzer nutzbaren Bildes ohne Blendung durch Licht von außen, wie etwa durch Sonneneinstrahlung und/oder Licht von einem anderen Fahrzeug. Durch die Blende 08 wird das erfasste Blickfeld 07 der Videokamera 05 abgeschnitten. Durch den Spiegel 61 innerhalb der Blende 08 kann dieser Blickfeldverlust kompensiert sowie ersetzt werden und die Videokamera 05 erfasst die für den Nutzer erkennbaren Bilder des Spiegels 61, entsprechend dem interessierenden Blickfeld 72 über die Umlenkung anhand des durch den Spiegel 61 gebildeten optischen Systems 06, und der Kameradirektsicht, entsprechend dem eigentlichen Blickfeld 71.

Das optische System 06 ermöglicht so ein eigentliches Blickfeld 71 der Videokamera 05 in die Ferne und ein interessierendes Blickfeld 72 in die Nähe.

Das in Fig. 4 b) dargestellte von der in die Fahrzeugleuchte aus Fig. 4 a) integrierten Videokamera 05 aufgenommene Videokamerabild 50 gibt das gesamte Blickfeld 07 der Videokamera 05 wieder. Dementsprechend gibt es in einer ersten Partie 51 das vorteilhaft in der Ferne liegende eigentliche Blickfeld 71 und in einer zweiten Partie 52 das vorteilhaft in der Nähe liegende interessierende Blickfeld 72 wieder.

Denkbar ist auch ein drehbarer Spiegel 61 beispielsweise als Teil eines mechatronisch-optisches-System, um adaptiv weitere nötige Sichtbereiche kompakt für die Videokamera 05 zur Verfügung zu stellen. Ebenso ist damit auch eine drehbare Blende 08 denkbar, die sich adaptiv auf die Lichteinflüsse der Umgebung, beispielsweise gemessen mit einem Sensor für das Umgebungslicht einstellt, um ein optimales Videokamerabild 50 für den Nutzer zu ermöglichen. Dieser Sensor könnte auch für weitere Funktionen in der beispielsweise als Heckleuchte ausgeführten Fahrzeugleuchte genutzt werden, wie etwa um adaptiv die Lichtstärke einzustellen.

Wichtig ist hervorzuheben, dass der Spiegel 61 aus mehreren Segmenten bzw. Facetten bestehen kann, um die Anzahl an Blickrichtungen zu erhöhen, wie in Fig. 4 c) dargestellt.

Fig. 5 zeigt in Fig. 5 b) den Vorteil eines erhöhter Sichtbereichs bei Einsatz eines Spiegels 61 bei nach außen geneigter Lichtscheibe 03, der ein eigentliches Blickfeld 71 der Videokamera 05 in die Ferne und ein interessierendes Blickfeld 72 in die Nähe ermöglicht, im Gegensatz zu einer Fahrzeugleuchte mit integrierter Videokamera nach dem Stand der Technik in Fig. 5 a) ohne dieser teil-vorgesetztes optisches System.

Vorteile insbesondere der in Fig. 4 und Fig. 5 b) und in Fig. 4 gezeigten Ausgestaltungen der Fahrzeugleuchte 01 sind eine Zusatzfunktion des Spiegels 61 als Blende 08, die Schutz vor Licht von außen bietet und damit das originale Videokamerabild 50 direkt, ohne nachträgliche Softwarekorrekturen oder dergleichen verbessert.

Weitere Vorteile sind ein Ersatz des durch die Blende 08 verlorenen Bildabschnitts durch das Bild des in der Blende 08 integrierten Spiegels 61, das von der Videokamera 05 direkt erfasst wird.

Der Kamera- und der Spiegelwinkel können aufeinander abgestimmt werden, so dass die Videokamera 05 sinnvoll in die Heckleuchte integriert werden kann. Dies ist insbesondere vorteilhaft hinsichtlich des verfügbaren Bauraums, da durch die erfindungsgemäße Lösung überraschenderweise verschiedene Winkel und/oder Positionen der Videokamera 05 im Leuchteninnenraum 04 möglich sind. Damit werden nach dem Stand der Technik unerreichbare Freiheitsgrade für einen kompakten Gesamtaufbau der Heckleuchte geschaffen.

Ferner ist dies vorteilhaft hinsichtlich der Formgebung. Nach dem Stand der Technik muss die Lichtscheibe optimalerweise nach innen geneigt sein mit entsprechend nach unten gerichteter Videokamera 05, wie in Fig. 4 a) beispielhaft dargestellt.

Durch die Teil-Umlenkung des direkten Videokamerablickfelds in das interessierende Blickfeld 72 anhand des abbildenden optischen Systems 06 kann die Lichtscheibe nunmehr durch die Erfindung auch nach außen geneigt sein, da sie einen erhöhten Freiheitsgrad hinsichtlich des Sichtfelds der Videokamera 05 schafft, wie einem Vergleich des Sichtfelds beim Stand der Technik in Fig. 5 a) und bei der Erfindung in Fig. 5 b) unmittelbar zu entnehmen ist.

Vermittels der Erfindung können sehr nahe Bereiche am Fahrzeugeck in einem geringen Abstand zum Fahrzeug erfasst werden.

Die Kombination aus mehreren Segmenten und einem drehbaren Spiegel ermöglicht einen vergleichsweise noch kompakteren Aufbau bei gleichzeitig erhöhter Anzahl an Blickrichtungen.

Bei dem in Fig. 6 gezeigten Ausführungsbeispiel einer Fahrzeugleuchte 01 mit in deren Leuchteninnenraum 04 integrierter, durch einen Abschnitt deren Lichtscheibe 03 blickender Videokamera 05 und einem dieser teilweise vorgesetztem abbildenden optischen System 06 umfasst das abbildende optische System 06 einen Spiegel 61 für ein extrem außerhalb des eigentlichen Blickfelds 71 der Videokamera 05 liegendes interessierendes Blickfeld 72.

Auch hier befindet sich der Spiegel 61 im direkten Blickfeld 07 Videokamera 05. Der Spiegel 61 ist so angeordnet, dass im Videokamerabild 50 ein in einem Sichtbereich extrem seitlich außerhalb des eigentlichen Blickfelds 71 der Videokamera 05 liegendes interessierendes Blickfeld 72 aufgenommen wird (Fig. 7).

Fig. 7 zeigt, wie hierdurch der Kamerablick ins eigentliche Blickfeld 71 kombiniert wird mit dem interessierenden Blickfeld 72 in einem nur über den Spiegel 61 einsehbaren, extrem außerhalb des Blickfelds 07 der Videokamera 05 liegenden Sichtfeld.

Sich hierdurch ergebende Vorteile sind, dass relativ extreme Blickwinkel erfasst werden können, beispielsweise um "um Eck" sehen zu können, gegebenenfalls auch unter Zuhilfenahme von Optiken in der Lichtscheibe 03, die diese Blickrichtung unterstützen. Solche Optiken können prismatische Ausprägung in einem definierten Lichtscheibenbereich umfassen.

Bei einer Videokamera 05, 05' pro beispielsweise als Heckleuchte ausgebildete Fahrzeugleuchte 01, 01' in einem Fahrzeug 10, können relativ extreme Blickwinkel genutzt werden, um das gleiche Bild in beiden Videokameras 05, 05' zu erfassen (Fig. 7). Somit kann über das Prinzip der Triangulation der Zusatznutzen einer Stereofunktionalität ermöglicht werden, beispielsweise zur Messung einer durch einen Doppelpfeil E in Fig. 7 angedeuteten Entfernung zu einem Objekt in einem Bereich außerhalb des ursprünglichen Kamerablickfelds. Eine redundante Entfernungsmessung zu anderen vorhandenen Sensoren ist somit auch möglich. Eine derartige redundante Sensorsicht ist zielführend, da für autonome Fahrzeuge die zumindest weitgehend volle Wahrnehmung der Umgebung stets gegeben sein muss. Um ein Fahrzeug bei Ausfall eines Sensors nicht stilllegen oder anhalten zu müssen, ist die Redundanz erforderlich. Hierbei kann ein Ausfall sowohl auf einen Defekt zurückzuführen sein, aber auch einfach durch Umwelteinflüsse, wie etwa Verschmutzung, Wetterverhältnisse oder ähnliches hervorgerufen werden.

Wenn die zwei Videokameras 05, 05' in den beiden als Heckleuchten ausgebildeten Fahrzeugleuchten 01, 01' ausreichende und/oder sich überschneidende Sichtfelder und/oder -winkel erfassen können, so ist diese Entfernungsmessung analog auch ohne Spiegel 61 erreichbar. Es müssen die zwei gleichen Videobilder 50 der beiden Videokameras 05, 05' mittels des Prinzips der Triangulation verglichen werden.

Bei den in Fig. 8, Fig. 9 und Fig. 10 dargestellten Ausführungsbeispielen wird eine einer Entfernungsmessung dienende Stereofunktionalität mit nur einer Videokamera 05 erhalten.

Dabei nutzt die in Fig. 8 a) gezeigten Ausgestaltung einer Fahrzeugleuchte 01 mit in diese integrierter, durch einen Abschnitt deren Lichtscheibe 03 blickender Videokamera 05 den Vorteil einer Stereokamera-Funktionalität mittels eines durch Einsatz einer zwei Spiegel 611, 612 umfassenden Doppelspiegelanordnung erhaltenen versetzten Blicks in das im eigentlichen Blickfeld 71 liegende interessierende Blickfeld 72. Dies ermöglicht eine Entfernungsmessung zu im interessierenden Blickfeld 72 befindlichen Objekten.

Ein in Fig. 8 b) dargestelltes, von der in die Fahrzeugleuchte aus Fig. 8 a) integrierten Videokamera aufgenommenes, in eine das eigentliche Blickfeld 71 widergebende erste Partie 51 und in eine das interessierende Blickfeld 72 widergebende zweite Partie 52 unterteiltes Videokamerabild 50 zeigt zweimal das gleiche Bild, einmal im über das abbildende optische System 06 einsehbaren interessierenden Blickfeld 72 und einmal im direkt durch die Videokamera 05 einsehbaren eigentlichen Blickfeld 71.

Bei der in Fig. 9 a) gezeigten Ausgestaltung einer Fahrzeugleuchte 01 mit in diese integrierter, durch einen Abschnitt deren Lichtscheibe 03 blickender Videokamera 05 erfolgt eine Entfernungsmessung zu im interessierenden Blickfeld 72 befindlichen Objekten anhand durch Einsatz zweier Prismen 62 mit jeweils zwei reflektierenden Prismenflächen 621, 622 erhaltener, entlang einer Basislinie versetzter Blicke in das interessierende Blickfeld 72. Eine zusätzliche Blickrichtung ist durch das eigentliche Blickfeld 71 der Videokamera 05 möglich.

Ein in Fig. 9 b) dargestelltes, von der in die Fahrzeugleuchte aus Fig. 9 a) integrierten Videokamera aufgenommenes Videokamerabild 50 ist vorteilhaft in eine den ersten Blick in das interessierende Blickfeld 72 widergebende erste Partie 51, in eine den zweiten Blick in das interessierende Blickfeld 72 widergebende zweite Partie 52, und in eine das eigentliche Blickfeld 71 widergebende dritte Partie 53 aufgeteilt. Auch hier kann ein Vergleich der jeweils einen Blick ins interessierende Blickfeld 72 widergebenden Partien 51, 52 zur Abstandsmessung zu im interessierenden Blickfeld 72 befindlichen Objekten herangezogen werden.

Bei der in Fig. 10 a) gezeigten Ausgestaltung einer Fahrzeugleuchte 01 mit in diese integrierter, durch einen Abschnitt deren Lichtscheibe 03 blickender Videokamera 05 erfolgt eine Entfernungsmessung zu im interessierenden Blickfeld 72 befindlichen Objekten anhand durch Einsatz zweier jeweils zwei Spiegel 611, 612 umfassender Doppelspiegelanordnungen erhaltener versetzter Blicke in das interessierende Blickfeld 72. Auch hier ist eine zusätzliche Blickrichtung durch das eigentliche Blickfeld 71 der Videokamera 05 möglich.

Ein in Fig. 10 b) dargestelltes, von der in die Fahrzeugleuchte aus Fig. 10 a) integrierten Videokamera 05 aufgenommenes Videokamerabild 50 ist vorteilhaft in eine den ersten Blick in das interessierende Blickfeld 72 widergebende erste Partie 51, in eine den zweiten Blick in das interessierende Blickfeld 72 widergebende zweite Partie 52, und in eine das eigentliche Blickfeld 71 widergebende dritte Partie 53 aufgeteilt. Hier kann ebenfalls ein Vergleich der jeweils einen Blick ins interessierende Blickfeld 72 widergebenden Partien 51, 52 zur Abstandsmessung zu im interessierenden Blickfeld 72 befindlichen Objekten herangezogen werden.

Den in Fig. 8, Fig. 9 und Fig. 10 dargestellten Ausgestaltungen gemein ist eine Videokamera 05 in Kombination mit zwei jeweils durch Spiegel 611, 612 oder jeweils durch Prismenflächen 621, 622 gebildeten abbildenden optischen Teil-Systemen. Ein durch die Prismenfläche 621 gebildetes abbildendes optisches Teil-System (Fig. 9), beziehungsweise ein durch den Spiegel 611 gebildetes abbildendes optisches Teil-System (Fig. 10) befindet sich im Sichtbereich der Videokamera 05. Ein durch die Prismenfläche 622 gebildetes abbildendes optisches Teil-System (Fig. 9), beziehungsweise ein durch den Spiegel 612 gebildetes abbildendes optisches Teil-System (Fig. 10) befindet sich außerhalb des Sichtbereichs der Videokamera 05. Das durch die Prismenfläche 621 gebildete abbildende optische Teil-System erfasst das durch die Prismenfläche 622 gebildete abbildende optische Teil-System (Fig. 9), beziehungsweise das durch den Spiegel 611 gebildete abbildende optische Teil-System erfasst das durch den Spiegel 612 gebildete abbildende optische Teil-System (Fig. 10).

Das durch die Prismenfläche 622 gebildete abbildende optische Teil-System (Fig. 9), beziehungsweise das durch den Spiegel 612 gebildete abbildende optische Teil-System (Fig. 10) erfasst das gewünschte Bild. Dieses gewünschte Bild kann auch direkt von der Videokamera 05 erfasst werden oder über ein analog aufgebautes weiteres abbildendes System, beispielsweise wie ein in Fig. 8 gezeigtes. Dadurch zeigt die Videokamera 05 zweimal das gleiche Bild, einmal über das durch die Prismenfläche 621 gebildete abbildende optische Teil-System (Fig. 9), beziehungsweise über das durch den Spiegel 611 gebildete abbildende optische Teil-System (Fig. 10) und einmal direkt durch die Videokamera 05 oder zweimal über die abbildenden optischen Teil-Systeme. Über das Prinzip der Triangulation kann dadurch der Abstand des Gegenstands im Bild erfasst werden. Somit ist eine Stereofunktionalität mit nur einer Kamera und zwei abbildenden Systemen gegeben.

Der das Videobild 50 erfassende Kamerachip wird dabei in mehrere Bereiche aufgeteilt, wie beispielsweise in Fig. 9 b) und in Fig. 10 b) gezeigt. Beim Prismensystem sind beispielsweise zwei Dove-Prismen oder zwei Porroprismen denkbar. Weiterhin können auch zusätzliche Facetten eingefügt werden, sodass mittels einer Videokamera 05 noch weitere Sichtfelder eröffnet werden können. Integrierbar sind diese Systeme auch in in Fig. 11 und Fig. 12 gezeigte Lichtleiterlösungen, wie auch in integrierte Prismen. Mittels eines Perger-Prismas können zusätzlich auch Anzeigen, wie etwa beispielsweise zur Kalibrierung dienende Hilfslinien eingespiegelt werden.

Sich hierdurch ergebende Vorteile sind ein erheblicher Zusatznutzen, indem mit nur einer Videokamera 05 in Kombination mit dem abbildenden optischen System 06 die Entfernung gemessen werden kann. Es ist die redundante Entfernungsmessung zu vorhandenen Sensoren möglich.

Dieses Prinzip ist nicht nur in der Heckleuchte denkbar, sondern auch in anderen Anwendungen, wie etwa Windschutzscheibe und/oder Frontscheinwerfer.

Beispielsweise um eine Entfernungsmessung auch bei Dunkelheit zuverlässig durch führen zu können, und/oder um beispielsweise bei der Umsicht in der Dunkelheit Objekte im eigentlichen Blickfeld 71 und/oder im interessierenden Blickfeld 72 besser oder überhaupt erkennen zu können, kann es vorteilhaft sein, beispielsweise in die voranstehend bereits beschriebenen Ausgestaltungen der erfindungsgemäßen Fahzeugleuchte 01 eine Beleuchtung des eigentlichen Blickfelds 71 und/oder des interessierenden Blickfelds 72, wie etwa eine Arbeitsbeleuchtung, zu integrieren.

Fig. 11 und Fig. 12 zeigen Ausführungsbeispiele von in ein abbildendes optisches System 06 integrierten Beleuchtungen. Das abbildende optische System 06 ist einer in eine Fahrzeugleuchte 01 integrierten, durch einen Abschnitt deren Lichtscheibe 03 blickenden Videokamera 05 zum Teil vorsetzbar beziehungsweise zum Teil vorgesetzt.

Das der Videokamera 05 zum Teil vorsetzbare beziehungsweise zum Teil vorgesetzte abbildende optischen Systems 06 ermöglicht ein erweitertes Blickfeld der Videokamera 05 umfassend ein eigentliches Blickfeld 71 der direkt in die Ferne blickenden Videokamera 05, und ein interessierendes Blickfeld 72 in die Nähe unter Umlenkung des auf das abbildende optische System 06 gerichteten verbleibenden Teils des Blickfelds 07 der Videokamera 05 vermittels des optischen Systems 06.

Die Ermöglichung eines erweiterten Blickfelds mit nur einer Videokamera 05 in Kombination mit einer Arbeitsbeleuchtung ist durch ein TIR-Prismensystem (Fig. 11) oder ein TIR-Lichtleitersystem (Fig. 12) umsetzbar.

Dabei wird wie in Fig. 11 und Fig. 12 gezeigt ein Prisma 64 eingesetzt um den erweiterten Sichtbereich der Videokamera 05 zu ermöglichen sowie den Strahlengang 90 der Beleuchtung der Lichtquelle 09 zu lenken. Die Videokamera 05 behält weiterhin den originalen Teilbereich des Videokamerasichtfelds.

Dieses Prinzip kann auch mittels eines Lichtleiters 65 umgesetzt werden, wie in Fig. 12 gezeigt. Dieser Lichtleiter 65 lenkt den Strahlengang 90 des von der Lichtquelle 09 zur Beleuchtung abgegebenen Lichts in die gewünschte Richtung für die Videokamera 05 und enthält gleichzeitig Auskoppeloptiken für andere Lichtfunktionen, wie etwa für eine Rückfahrscheinwerferlichtfunktion.

Die Kamerafunktionalität einer Heckleuchte kann u. a. durch das Ausleuchtsystem bewusst als Designelement zur Hervorhebung, wie etwa auch als so genanntes "Ambient Light" bezeichnetes Umgebungslicht um die Videokamera 05 genutzt werden.

Sich hierdurch darüber hinaus ergebende Vorteile sind ein ausgeleuchteter Eckbereich des Fahrzeugs, der ansonsten dunkel ist und damit eine verbesserte Kameraaufnahme für den Nutzer.

Darüber hinaus kann hierdurch eine kompakte Bauweise bei gleichzeitiger Erhöhung der Blickfelder mit nur einer Videokamera 05 erhalten werden.

Ferner erlauben die in Fig. 11 und Fig. 12 gezeigten Ausgestaltungen eine zusätzliche Nutzung des Prismas 64 zur Arbeitsbeleuchtung.

Alternativ oder zusätzlich zu den voranstehenden Ausführungen kann das einer in die Fahrzeugleuchte 01 integrierten Videokamera 05 teil-vorsetztbare optische System 06 eine Linse 63 umfassen, beispielsweise eine in Fig. 13 a) dargestellte Linse 63. Diese kann einen beispielsweise zentralen Telebereich 631 für den Fernbereich und diese konzentrisch umgebende Weitwinkelbereiche 632, 633 umfassen.

Eine solche Linse 63 kann wie in Fig. 13 b) dargestellt in die Lichtscheibe 03 einer Fahrzeugleuchte 01 integriert sein.

Das abbildende optische System 06, das die mehrfachen Sichtbereiche ermöglicht, kann hierbei vollständig durch eine in die Lichtscheibe 03 integrierte Geometrie einer Linse 63 gebildet sein. Dies erlaubt im Gegensatz zu den voranstehend beschriebenen Ausgestaltungen mit abbildenden optischen Systemen hinter der Lichtscheibe 03 den Erhalt des gleichen Ziels jedoch mit geringerem Bauraumbedarf. Die Linse 63 ermöglicht einen oder mehrere Weitwinkelbereiche 632, 633 sowie einen festbrennweitigen Fernbereich 631. Dahinter befindet sich die Videokamera 05 in der beispielsweise als eine Heckleuchte ausgebildeten Fahrzeugleuchte (Fig. 13 b)).

Sich hierdurch ergebende Vorteile sind neben einer besonders kompakten Bauweise, dass es zu keinen Qualitätsverlusten des Videobilds durch zwischen der Videokamera 05 und der Lichtscheibe 03 befindliche Abbildungssysteme kommt.

Die Lichtscheibe 03 mit der in diese integrierten Geometrie einer Linse 63 kann für die Videokamera 05 auch als Vorsatzoptik dienen. Eine solche Vorsatzoptik kann den zu den vorangehend erwähnten Ausgestaltungen beschriebenen abbildenden optischen Systemen 06 vorgesetzt und/oder Teil der zu den vorangehend erwähnten Ausgestaltungen beschriebenen abbildenden optischen Systemen 06 sein.

So ist es auch in Verbindung mit der Linse 63 denkbar, im Heckteil eines Fahrzeugs 10 wie in Fig. 7 dargestellt zwei Videokameras 05 einzubauen, eine in die rechte Heckleuchte und eine in die linke, wodurch wiederum eine Stereofunktionalität gegeben ist.

Im Kamerazentralblickfeld oder in einem anderen definierten Bereich des Kamerablickfeldes ist dann der direkte Blick nach hinten einschließlich der Stereokamerafunktionalität gegeben. Zu den Seiten nach außen und innen hin gibt es vorzugsweise eine Freiformoptik oder Asphärenoptik in der Lichtscheibe, die dann hier eine entsprechende Weitwinkelfunktionalität verwirklicht, so dass ein größeres Blickfeld ermöglicht wird. Damit ist das Blickfeld, analog eines am Rand hin asphärisch geformten Außenspiegels, so ausgeführt, dass es erweitert ist. Damit lässt sich auch eine Rückfahrkamerafunktionalität verwirklichen und die nach dem Stand der Technik bisher hierzu benötigte, in der Mitte des Fahrzeughecks angeordnete Videokamera kann eingespart werden.

Alle beschriebenen Ausgestaltungen ermöglichen zur Lösung der der Erfindung zu Grunde liegenden Aufgabe und der genannten Herausforderungen eine statische, nicht bewegliche Videokamera 05 einzusetzen, die gleichzeitig mehrere Blickfelder erfasst.

Aus dem Stand der Technik sind keine Lösungen des Problems mehrere Blickfelder mit nur einer Videokamera 05 in der Heckleuchte zu erfassen bekannt.

Wichtig ist hervorzuheben, dass die Erfindung auch in anderen Leuchten und Scheinwerfern eingesetzt werden kann und sich nicht nur auf den Einsatz in Heckleuchten beschränkt.

Die Fahrzeugleuchte 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der noch folgenden Beschreibung erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Leuchtengehäuse
- 03: Lichtscheibe
- 04: Leuchteninnenraum
- 05: Videokamera
- 05': Videokamera
- 06: abbildendes optisches System
- 07: Blickfeld der Videokamera
- 08: Blende
- 09: Lichtquelle
- 10: Fahrzeug

- 50: Videokamerabild
- 51: Partie des Videokamerabilds
- 52: Partie des Videokamerabilds
- 53: Partie des Videokamerabilds
- 61: Spiegel
- 62: Prisma
- 63: Linse
- 64: Prisma
- 65: Lichtleiter
- 71: eigentliches Blickfeld
- 71': eigentliches Blickfeld (in Bezug auf Fahrzeugbug links)
- 72: interessierendes Blickfeld
- 72': interessierendes Blickfeld (in Bezug auf Fahrzeugbug links)
- 90: Strahlengang der Beleuchtung

- 611: Spiegel
- 612: Spiegel
- 621: Prismenfläche
- 622: Prismenfläche
- 631: Telelinsenbereich
- 632: Weitwinkelbereich
- 633: Weitwinkelbereich

- A: Sichtfeld
- A': Sichtfeld (in Bezug auf Fahrzeugbug links)
- B: Sichtfeld
- B': Sichtfeld (in Bezug auf Fahrzeugbug links)
- E: Doppelpfeil

## Patentansprüche

1. Fahrzeugleuchte (01) mit einer in deren von einem Leuchtengehäuse (02) und einer Lichtscheibe (03) wenigstens teilweise umgebenden Leuchteninnenraum (04) zumindest zum Teil beherbergten Videokamera (05), welche durch wenigstens einen Abschnitt der Lichtscheibe (03) blickt, wobei wenigstens einem Teil des Blickfelds (07) der Videokamera (05) zumindest ein in dem Leuchteninnenraum (04) beherbergtes abbildendes optisches System (06) vorgesetzt ist, vermittels welchen abbildenden optischen Systems (06) der auf es gerichtete Teil des Blickfelds (07) der Videokamera (05) auf mindestens ein in einer von der Richtung des verbleibenden Teils des Blickfelds (71) abweichenden, anderen Richtung liegendes, interessierendes Blickfeld (72) umgelenkt wird.

2. Fahrzeugleuchte nach Anspruch 1, wobei das abbildende optische System den auf es gerichteten Teil des Blickfelds (07) durch Reflexion umlenkt.

3. Fahrzeugleuchte nach Anspruch 1 oder 2, wobei das abbildende optische System (06) mindestens einen Spiegel (61) umfasst.

4. Fahrzeugleuchte nach Anspruch 1, 2 oder 3, wobei das abbildende optische System (06) ein TIR-Element (62) umfasst, in dem eine Umlenkung des auf es gerichteten Teils des Blickfelds (07) durch Totalreflexion erfolgt.

5. Fahrzeugleuchte nach einem der voranstehenden Ansprüche, wobei das abbildende optische System (06) den auf es gerichteten Teil des Blickfelds (07) in entgegengesetzte Richtungen entlang einer Basislinie aufteilt und an entlang der Basislinie beabstandeten Punkten wiederum in das selbe interessierende Blickfeld (72) zum Zweck einer Abstandsmessung zu in dem interessierenden Blickfeld (72) befindlichen Objekten umlenkt.

6. Fahrzeugleuchte nach einem der voranstehenden Ansprüche, **gekennzeichnet durch** einen im umlenkungsfreien, geraden Blickfeld (07, 71) der Videokamera (05) liegenden Fernbereich.

7. Fahrzeugleuchte nach Anspruch 6, wobei das in einer von der Richtung des verbleibenden Teils des Blickfelds (71) abweichenden, anderen Richtung liegende interessierende Blickfeld (72) einen außerhalb des umlenkungsfreien, graden Blickfelds der Videokamera (05) liegenden Nahbereich umfasst.

8. Fahrzeugleuchte nach einem der voranstehenden Ansprüche, wobei das abbildende optische System (06) hinter einer Blende angeordnet ist.

9. Fahrzeugleuchte nach einem der voranstehenden Ansprüche, wobei das abbildende optische System (06) eine integrierte Beleuchtung umfasst.
